# EUROPÄISCHE PATENTANMELDUNG

(11) **EP 1 516 864 A2**
(43) Veröffentlichungstag der Anmeldung: **23.03.2005**
(21) Anmeldenummer: 04021504.8
(22) Anmeldetag: 10.09.2004
(51) Int. Cl.: C04B 35/622, C03B 19/06

(54) **Verfahren für die Herstellung eines Gussteils aus einem Kompositwerkstoff sowie Gussteil aus keramischen oder glasigem Kompositwerkstoff**

(30) Priorität: 22.09.2003 DE 10344189
(71) Anmelder: Heraeus Quarzglas GmbH & Co. KG, 63450 Hanau (DE)
(72) Erfinder: Werdecker, Waltraud, 63456 Hanau (DE); Fischer, Gero, 63839 Kleinwallstadt (DE); Kirst, Ulrich, 55116 Mainz (DE); Trommer, Martin, 36381 Schlüchtern (DE)
(74) Vertreter: Staudt, Armin

(57) **Zusammenfassung**

Es ist ein Verfahren für die Herstellung eines Gussteils aus einem Kompositwerkstoff durch Schlickergießen bekannt, umfassend das Bereitstellen eines Kompositschlickers, der Werkstoffteilchen im Größenbereich unterhalb von 10 µm sowie Werkstoffkörnung im Größenbereich oberhalb von 10 µm enthält, Homogenisieren des Kompositschlickers, Gießen des Kompositschlickers in eine Form unter Bildung eines Blaukörpers, Trocknen des Blaukörpers unter Bildung eines porösen Grünkörpers, und thermische Verfestigung des Grünkörpers. Um hiervon ausgehend die mit der Trockenschwindung einhergehenden Nachteile zu verringern, wird erfindungsgemäß vorgeschlagen, dass der Kompositschlicker mit einem Feststoffgehalt von mindestens 80 Gew.-% in eine Form gegossen wird, welche eine für die Flüssigkeit undurchlässige Formwandung aufweist, wobei der Kompositschlicker nach dem Gießen unter Bildung eines gefrorenen Blaukörpers auf eine Kühltemperatur unterhalb des Gefrierpunktes der Flüssigkeit abgekühlt wird, und wobei das Trocknen ein Erwärmen des gefrorenen Blaukörpers auf eine Heiztemperatur unterhalb der Siedetemperatur der Flüssigkeit umfasst. Ein nach dem erfindungsgemäßen Verfahren hergestellten Gussteil zeichnet sich durch eine homogene Poren- und Dichteverteilung sowie eine hohe Festigkeit aus.

## Beschreibung

Die Erfindung betrifft ein Verfahren für die Herstellung eines Gussteils aus einem Kompositwerkstoff durch Bereitstellen eines Kompositschlickers, der Werkstoffteilchen im Größenbereich unterhalb von 10 µm sowie Werkstoffkörnung im Größenbereich oberhalb von 10 µm enthält, Homogenisieren des Kompositschlikkers, Gießen des Kompositschlickers in eine Form unter Bildung eines Blaukörpers, Trocknen des Blaukörpers unter Bildung eines porösen Grünkörpers, und thermische Verfestigung des Grünkörpers.

Weiterhin betrifft die Erfindung ein Gussteil aus einem keramischen oder glasigen Kompositwerkstoff, der eine homogene Matrix aus dem Werkstoff aufweist, in welcher Körner des Werkstoffs mit einer Korngröße von mehr als 10 µm eingebettet sind, und der eine Wandung aufweist, innerhalb der eine Gießachse verläuft, die während des Gießens in der Vertikalen verläuft.

Das sogenannte Schlickergießverfahren ist in der keramischen Verfahrenstechnik zur Herstellung keramischer oder glasiger Bauteile gebräuchlich, insbesondere auch zur Herstellung von Quarzglasbauteilen. Aus der DE 101 14 484 A1 ist ein Schlickergießverfahren zur Herstellung eines Kompositwerkstoffs mit hohem SiO₂-Gehalt bekannt. Hierbei wird eine Quarzglaskörnung, die als Füllstoff dient, in einer SiO₂-haltigen Matrix eingebettet, welche vollständig aus synthetisch erzeugtem SiO₂ hergestellt wird. Die Matrix hat einen SiO₂-Gehalt von mindestens 99 Gew.-% und sie besteht aus mindestens zwei Teilchenfraktionen, die jeweils als Granulate nanoskaliger, amorpher, synthetisch erzeugter SiO₂-Primärteilchen mit einer mittleren Primärteilchengröße von weniger als 100 nm vorliegen, gebildet werden.

Der nach dem bekannten Verfahren erhaltene Kompositwerkstoff weist lediglich geschlossene Poren auf, hat keine kristallinen Anteile, und seine Dichte beträgt 2,1 g/cm³. Er zeichnet sich durch hohe Temperaturwechselbeständigkeit und chemische Beständigkeit aus. Der Kompositwerkstoff ist daher für einen Einsatz als Kokille zum Erschmelzen von Solarsilizium geeignet. Die synthetischen Ausgangssubstanzen zur Herstellung des Kompositwerkstoff sind jedoch teuer.

Ein weiteres Verfahren für die Herstellung eines Quarzglastiegels mittels Schlikkergießverfahren ist in der DE 199 43 103 A1 beschrieben. Dabei wird von einer Suspension aus hochreinen, amorphen SiO₂-Partikeln ausgegangen, deren Füllgrad mindestens 83,96Gew.-% beträgt. Der hohe SiO₂-Füllgrad wird durch Einsatz von SiO₂-Partikeln mit bimodalen Partikelgrößenverteilung erreicht, wobei etwa 95 % des eingesetzten SiO₂ als in der Knallgasflamme erzeugtes SiO₂-Pulver mit einer mittleren Teilchengröße von 30 µm vorliegen.

Ein Verfahren zur Herstellung eines feuerfesten, gesinterten Gussteils aus glasigem Werkstoff und ein Gussteil gemäß der eingangs genannten Gattung sind aus der DE 693 06 169 T2 bekannt. Bei dem darin beschriebenen Kieselglasgegenstand bilden zwei Fraktionen feinkörniger SiO₂-Pulver eine Bindephase für eine weitere SiO₂-haltige Komponente in Form von groben SiO₂-Körnern mit einer Korngröße zwischen 40 µm und 1000 µm. Eines der beiden feinkörnigeren SiO₂-Pulver liegt als Quarzstaub vor, der aus im wesentlichen kugelförmigen Teilchen mit Teilchengrößen im Bereich zwischen 0,2 µm und 0,6 µm gebildet wird. Der vorzugsweise eingesetzte Quarzstaub stammt aus dem Schmelzvorgang und der Reduktion von Zirkoniumdioxid. Die Quarzglas-Ausgangskomponenten werden in einem Trockenmahlverfahren vorgemischt und anschließend wird daraus unter Zusatz eines Stabilisators ein Schlicker hergestellt. Die Gewichtsanteile der einzelnen Komponenten betragen 54% (grobe SiO₂-Körner), 33% (feinkörnige SiO₂-Teilchen) und 13% (Quarzstaub). Der Schlicker wird in Vakuum entgast und in eine Gipsform gegossen. Der so hergestellte Grünkörper wir getrocknet und in einem Ofen bei 1050 °C zu einem Komposit-Bauteil gesintert. Herstellungsbedingt weist der Gusskörper eine Gießachse auf, die während des Gießens in der Vertikalen und die in der Wachstumsrichtung der Wandung des sich bildenden Blaukörpers verläuft.

Für die Mikrostruktur des Bauteils sind grobe Quarzglaskörner, die in einer relativ kontinuierlichen Matrix aus feineren Teilchen und aus kugelförmigen Teilchen aus Quarzstaub eingebettet sind charakteristisch. Das Bauteil weist eine offene Porosität von 13 % auf, und seine Dichte liegt bei1,91 g/cm³. Die kristallographische Analyse ergibt einen Cristobalitgehalt von weniger als 2%.

Aufgrund seiner offenen - das heißt durchgehenden - Porosität ist der bekannte Kompositwerkstoff für Bauteile, bei denen es auf Dichtheit oder hohe Reinheit ankommt, nicht uneingeschränkt einsetzbar. Metallische Schmelzen können durch die Poren in die Bauteilwandung eindringen und zu Leckagen führen.

In einer Verfahrensvariante gemäß der DE 693 06 169 T2 wird anstelle des beim Schmelzvorgang und der Reduktion von Zirkoniumdioxid anfallenden Quarzstaubs gemahlenes oder mikrogemahlenes Quarzgut eingesetzt. Der dabei erhaltene Kieselglasgegenstand zeigte jedoch eine niedrige Dichte und eine sehr geringe Biegefestigkeit.

Probleme beim Schlickergießverfahren ergeben sich insbesondere durch die Schwindung des Grünkörpers beim Trocknen und beim Sintern. Es können Schwindungsrisse entstehen und die Maßhaltigkeit der Bauteile ist häufig gering.

Die Trockenschwindung erschwert auch die Herstellung von Bauteilen durch sogenannten Kernguss, bei dem der Schlicker um einen Kern gegossen wird, der nach dem Trocknen entfernt wird. Durch die Schwindung beim Trocknen schrumpft der Grünkörper auf den Kern auf und reißt dabei, oder der Kern kann nicht ohne Beschädigung des Grünkörpers von diesem gezogen werden.

Infolge des Einsatzes von Formen, welche die Flüssigkeit der Suspension aufsaugen, bildet sich häufig eine ausgeprägte Gießseele in Form aneinandergereihter Poren aus, die zu einer Schwächung des Gefüges führen. Großformatige Bauteile können nur bedingt und mit einfachem Design gefertigt werden, wobei häufig zur Erleichterung der Entnahme des Blaukörpers aus der Form konische Wandungen erzeugt werden müssen.

Da das Schlickergießverfahren an und für sich eine kostengünstige Herstellung von Bauteilen - auch mit komplexer Geometrie - ermöglicht, wäre es äußerst wünschenswert, die genannten Nachteile bei der Herstellung von Quarzglas zu vermeiden.

Der Erfindung liegt daher die Aufgabe zugrunde, eine Verfahrensweise zur Herstellung eines Gussteils aus einem Kompositwerkstoff mittels Schlickergießen anzugeben, mit dem sich die mit der Trockenschwindung einhergehenden Nachteile verringern oder beseitigen lassen, und das die Herstellung von Gussteilen mit zylinderförmigen Wandungen erleichtert und das insbesondere auch zur Herstellung großformatiger Gussteile geeignet ist.

Weiterhin liegt der Erfindung die Aufgabe zugrunde, ein Gussteil aus einem keramischen oder glasigen Kompositwerkstoff bereitzustellen, das sich durch eine hohe Festigkeit auszeichnet.

Hinsichtlich des Verfahrens wird diese Aufgabe ausgehend von dem eingangs genannten Verfahren erfindungsgemäß dadurch gelöst, dass der Kompositschlikker mit einem Feststoffgehalt von mindestens 80 Gew.-% in eine Form gegossen wird, welche eine für die Flüssigkeit undurchlässige Formwandung aufweist, wobei der Kompositschlicker nach dem Gießen unter Bildung eines gefrorenen Blaukörpers auf eine Kühltemperatur unterhalb des Gefrierpunktes der Flüssigkeit abgekühlt wird, und wobei das Trocknen ein Erwärmen des gefrorenen Blaukörpers auf eine Heiztemperatur unterhalb der Siedetemperatur der Flüssigkeit umfasst.

Der herzustellende Kompositwerkstoff besteht aus einer homogenen Matrix aus dem Werkstoff, in welche gröbere Körner des Werkstoffes eingebettet sind. Bei dem Werkstoff handelt es sich um Quarzglas, Siliziumnitrid, Siliziumcarbid, Zirkonsilikat, Silizium, oder um ein Gemisch dieser Stoffe.

Das erfindungsgemäße Verfahren ermöglicht es, rissfreie Gussteile aus dem Kompositwerkstoff mittels Schlickergießverfahren - auch durch Kernguss - herzustellen. Voraussetzung hierfür ist eine hohe Festigkeit und eine sehr geringe Trockenschwindung des Grünkörpers. Dieses Erfordernis wird durch folgende Verfahrensmerkmale erreicht:
1. Der Kompositschlicker enthält feinkörnige Teilchen des Werkstoffes und gröbere Körnung des Werkstoffes mit einer mittleren Teilchengröße oberhalb von 10 µm. Er zeichnet sich durch einen hohen Feststoffgehalt von mindestens 80 Gew.-%, bevorzugt mindestens 90 Gew.-% aus. Der hohe Feststoffgehalt in Verbindung mit dem Zusatz der gröberen Werkstoffkörnung wirkt der Schwindung des Grünkörpers entgegen und verbessert dessen Formstabilität, was sich auf die Maßhaltigkeit von Bauteilen aus dem Kompositwerkstoff günstig auswirkt.
2. Der Kompositschlicker wird in eine Form gegossen, welche mindestens eine für die Flüssigkeit undurchlässige Formwandung aufweist. Die für die Flüssigkeit undurchlässige Formwandung verhindert einen Verlust von Flüssigkeit aus dem Kompositschlicker während einer Phase, in der die darin suspendierten Werkstoffteilchen noch frei beweglich sind. Diese Beweglichkeit der Werkstoffteilchen würde ansonsten zu einem Materietransport in Richtung auf die saugende Formwandung und damit zur der Ausbildung einer Gießseele oder anderer Material-Inhomogenitäten führen.
   Es hat sich gezeigt, dass dadurch seelenfreie Blaukörper mit einer homogenen Feststoffverteilung und mit hoher Festigkeit erhalten werden. Dieser vorteilhafte Effekt tritt - wenn auch in vermindertem Umfang - auch dann ein, wenn die Form außer der mindestens einen undurchlässigen Formwandung auch Wandungsbereiche aufweist, die für die Flüssigkeit und für darin eingeschlossene Luftblasen durchlässig sind.
   Bei vollständig undurchlässigen Formwandungen erfolgt kein "Nachsacken" des Kompositschlickers, so dass eine glatte Gießoberfläche erhalten wird, die keiner Nachbearbeitung bedarf. Die Form kann außer der mindestens einen undurchlässigen Formwandung auch eine für Gase poröse Formwandung oder für Gase poröse Formwandungsbereiche aufweisen, welche zum Entlüften dienen und die Entstehung Oberflächenblasen verhindern. Als Werkstoff für die Ausbildung der Form haben sich teflon-beschichtetes Blech (wie Aluminium- oder Stahlblech) bewährt. Ein weiterer bevorzugter Formwerkstoff ist Silikon, bei dessen Einsatz besonders störstellenfreie (blasenfreie) Oberflächen erhalten werden, wenn er vor dem Einsatz ausgeheizt wird.
3. Der Kompositschlicker wird in der Form unter Bildung eines gefrorenen Blaukörpers auf eine Kühltemperatur unterhalb des Gefrierpunktes der Flüssigkeit gekühlt. Die Form wird entweder vor, während oder nach dem Gießen auf eine Temperatur unterhalb des Gefrierpunktes der Flüssigkeit der Suspension gekühlt. Dadurch kommt es zu einer Kristallbildung in der Flüssigkeit, im Fall von Wasser zu einer Eisbildung, die eine Koagulation von Werkstoff-Partikeln vor allem im Submikronbereich bewirkt und einer Entmischung oder Sedimentation im noch viskosen Blaukörper entgegenwirkt. Um eine Nadelbildung weitestgehend zu unterbinden, erfolgt das Gefrieren erfolgt so rasch wie möglich.
4. Zum Trocknen und Verfestigen wird der erstarrte Blaukörper im gefrorenen Zustand auf eine Heiztemperatur unterhalb der Siedetemperatur der Flüssigkeit erwärmt. Durch die vergleichsweise schonende Erwärmung wird ein langsameres Abdampfen der Flüssigkeit erreicht, so dass eine starke Gasbildung infolge einer innerhalb des gefrorenen Blaukörpers siedenden Flüssigkeit und damit einhergehende Beschädigungen des Blaukörpers vermieden werden. Zu dieser überraschend günstigen Wirkung des Trocknens des Grünkörpers durch Schockgefrieren und anschließendes schonendes Erwärmen in gefrorenem Zustand trägt der geringe Wassergehalt des Kompositschlickers und des Blaukörpers wesentlich bei.
   Der Blaukörper im gefrorenen Zustand entformt und anschließend getrocknet. Die Trocknung des Blaukörpers kann aber auch in der Form erfolgen, wenn diese das Abdampfen der Flüssigkeit wenig behindert.

Durch die anschließende thermische Verfestigung des Grünkörpers (Sintern bei einer Temperatur unterhalb des Schmelzpunktes des Werkstoffes) wird ein mechanisch stabiles Gussteil erhalten, das eine homogene Poren- und Dichteverteilung sowie eine geringe offene Porosität aufweist, und das sich durch eine geringe Gesamtschwindung (Trocken- und Sinterschwindung) auszeichnet, die weniger als 4 %, und sogar weniger als 2,5 %, betragen kann.

Als besonders günstig hat sich eine Kühltemperatur erwiesen, die zwischen minus 20°C und minus 80 °C, vorzugsweise zwischen minus 30 °C und minus 60°C, liegt.

Die Kühltemperatur hängt im wesentlichen von der Gefriertemperatur der Flüssigkeit ab. Die genannten Grenzwerte gelten für Flüssigkeiten mit einer Gefriertemperatur um 0 °C, wie etwa Wasser oder homogene Mischungen organischer Verbindungen mit Wasser. Je weiter die Kühltemperatur unterhalb der Gefriertemperatur der Flüssigkeit liegt, umso rascher erstarrt der Kompositschlikker und umso höher ist die Festigkeit des gefrorenen Blaukörpers. Im Fall eines Gussteils aus Quarzglas (Werkstoff) wird vorzugsweise eine Flüssigkeit eingesetzt, die Tetraethylorthosilikat (TEOS) enthält, da der TEOS-Anteil der Flüssigkeit zu einem erhöhten Anteil an SiO₂ im Kompositschlicker und einer höheren Festigkeit führt und zudem zu einer Reduzierung von Gefrierstrukturen beiträgt.

Weiterhin hat es sich bewährt, wenn die Heiztemperatur im Bereich zwischen 40°C und 90°C, vorzugsweise im Bereich zwischen 50°C und 80°C liegt.

Es hat sich gezeigt, dass das Entfernen von Flüssigkeit durch Erwärmen des schockgefrorenen Blaukörpers bei einer Temperatur im Bereich zwischen 40°C und 90°C zu einer hohen Festigkeit des resultierenden Grünkörpers beiträgt.

Bevorzugt wird der gefrorene Blaukörper in einer Trockenkammer, aus der Feuchtigkeit abgezogen wird, getrocknet.

Bei der Trockenkammer handelt es sich zum Beispiel um einen Umlufttrockenschrank oder um einen Mikrowellentrocknungsofen. Durch das Entfernen der Feuchtigkeit aus der Trockenkammer wird ein Kondensieren von Wasserdampf und ein oberflächliches Wiedereinfrieren, das die Oberflächenstruktur stören und die Grünfestigkeit vermindern kann, verhindert. Insbesondere bei der Mikrowellentrocknung ist darauf zu achten, dass die Temperatur 90 °C nicht übersteigt.

In einer ersten bevorzugten Verfahrensvariante wird der Kompositschlicker vorteilhafterweise in eine Form gegossen, die auf eine Temperatur unterhalb des Gefrierpunktes der Flüssigkeit gekühlt ist.

Die Form weist bereits beim Gießen des Kompositschlickers eine Temperatur unterhalb des Gefrierpunktes der Flüssigkeit auf. Dadurch wird ein besonders rasches Abkühlen des Kompositschlickers erreicht und eine Sedimentation verhindert.

In einer alternativen und gleichermaßen bevorzugten Verfahrensvariante wird der Kompositschlicker in eine Form gegossen, die auf eine Temperatur oberhalb der Umgebungstemperatur erwärmt ist.

Dadurch wird vor dem Abgießen des Kompositschlickers eine Kondensation von Wasser aus der Umgebungsluft an den Formwandungen vermieden. Derartige Kondensationen können im Blaukörper zu Oberflächenschäden führen. Diese Verfahrensweise kommt daher vor allem bei hohen Anforderungen an die Oberflächengüte und bei hoher Luftfeuchtigkeit zum Einsatz.

Die Festigkeit des Grünkörpers kann durch ein Wachstum sehr großer Kristalle (Eiskristalle) beeinträchtigt werden. Im Fall von Quarzglas (Werkstoff) wirkt zwar das in der Suspension gelöste SiO₂ bereits als Eiskristallwachstumsinhibitor. Es hat sich aber in jedem Fall als vorteilhaft erwiesen, dem Kompositschlicker zusätzlich eine eiskristallwachstumsinhibierende Substanz beizufügen.

Die Zugabe der eiskristallwachstumsinhibierenden Substanz führt dazu, dass möglichst viele und dafür möglichst kleine Kristalle gebildet werden. Wirksame Substanzen dieser Art sind Alkohole, wie Isopropanol, sowie Glycerin, Polyethylenglycol, Polyacrylate und siliziumorganische Verbindungen, wie TEOS, wobei auch ein Zusatz nanoskaliger Teilchen den gleichen Zweck erfüllt (letztere jedoch maximal 5 Gew.-%, vorzugsweise maximal 1 Gew.-%).

Zur Herstellung eines Gussteils aus Quarzglas enthält der Kompositschlicker amorphe SiO₂-Teilchen im Größenbereich unterhalb von 10 µm sowie Quarzglaskörnung im Größenbereich oberhalb von 10 µm, vorzugsweise oberhalb von 100 µm, und er wird mit einer Dichte von mindestens 1,75 g/cm³ in die Form gegossen.

Der Kompositschlicker enthält in dem Fall feinkörnige SiO₂-Teilchen mit Korngrößen < 10 µm und gröbere Quarzglaskörnung mit einer mittleren Teilchengröße oberhalb von 10 µm, vorzugsweise oberhalb von 100 µm. Er zeichnet sich durch eine hohen Dichte von mindestens 1,75 g/cm³aus, welche durch einen hohen Feststoffgehalt erreicht wird. Diese Dichte entspricht etwa einem Feststoffgehalt von mindestens 80 Gew.-% SiO₂. Die thermische Verfestigung des Grünkörpers erfolgt in dem Fall bevorzugt im Temperaturbereich zwischen 800 °C und 1440 °C. Durch Sintern wird ein mechanisch stabiles Gussteil aus opakem Quarzglas erhalten, das eine homogene Poren- und Dichteverteilung sowie eine geringe offene Porosität aufweist, und das sich durch eine geringe Gesamtschwindung (Trocken- und Sinterschwindung), die weniger als 2% betragen kann, und durch eine hohe Dichte von mindestens 1,80 g/cm³ auszeichnet.

Die folgenden Ausführungen zur Herstellung eines Kompositschlickers beziehen sich auf den Fall des Werkstoffes Quarzglas. Für andere Werkstoffe können die für Quarzglas charakteristischen Parameter anhand weniger Versuche und fachmännischen Wissens angepasst werden.

Eine besonders hoher Feststoffgehalt des Grünkörpers wird erreicht, wenn der Kompositschlicker erzeugt wird, indem SiO₂-Teilchen, deren Teilchengrößen und Teilchengrößenverteilung durch einen D₅₀-Wert von maximal 15 µm und durch einen D₉₀-Wert von maximal 50 µm gekennzeichnet sind, mit Flüssigkeit vermischt werden, wobei ein homogener Grundschlicker mit einem Feststoffgehalt von mindestens 75 Gew.-% erzeugt wird, und wobei in den homogenen Grundschlicker die Quarzglaskörnung unter Bildung des Kompositschlickers eingemischt wird.

Vorzugsweise erfolgt das Vermischen der SiO₂-Teilchen und der Flüssigkeit dadurch, indem amorphe SiO₂-Körnung in der Flüssigkeit zu den SiO₂-Teilchen vermahlen wird.

Der hohe Feststoffgehalt des Grundschlickers wird zum einen durch eine spezielle Qualität des im Schlicker enthaltenen Feststoffes erhalten, nämlich durch feinteilige, amorphe SiO₂-Teilchen, die sich durch Teilchengrößen und eine Teilchengrößenverteilung auszeichnen, die durch einen D₅₀-Wert von maximal 15 µm und durch einen D₉₀-Wert von maximal 50 µm gekennzeichnet sind.

Diese spezielle Qualität des Feststoffes wird vorzugsweise durch Vermahlen von SiO₂-Körnung in der Flüssigkeit erzeugt, wobei wiederum eine Voraussetzung für einen effektiven Mahlvorgang ein hoher anfänglicher Feststoffgehalt des Grundschlickers ist. Das Vermahlen der SiO₂-Körnung trägt zum Homogenisieren des Grundschlickers bei, und es kommt beim Vermahlen darüber hinaus durch allmähliches Lösen von SiO₂ bis hin zur Löslichkeitsgrenze in der Flüssigkeit zu einem Absenken des pH-Wertes, was wiederum eine weitere Löslichkeit von SiO₂ begünstigt.

Der so erhaltene Grundschlicker ist klebrig und weist keine Sedimentationsneigung auf. Damit ist eine starke Kohäsionsneigung verbunden, die zu einer hohen Gründichte und einer guten Homogenität und Feinporigkeit der Blaukörper- und Grünkörpermatrix führt.

Der Feststoffgehalt wird zusätzlich erhöht, indem dem homogenen Grundschlicker weiterer Feststoff in Form von Quarzglaskörnung beigefügt wird. Das Beifügen der Quarzglaskörnung erfolgt jedoch erst nach dem Vermischen und dem Homogenisieren des Grundschlickers, da es ansonsten zu einem Verklumpen kommen kann, und die Gießfähigkeit des Schlickers beeinträchtigt wird. Der Zusatz von Quarzglaskörnung ist so bemessen, dass sich ein Kompositschlicker mit einer Dichte von mindestens 1,85 g/cm³ ergibt. Durch den Zusatz der Quarzglaskörnung wird nicht nur der Feststoffgehalt des Schlickers erhöht, sondern es wird auch die Formstabilität des Grünkörpers verbessert und die Schwindung beim Trocknen und beim Sintern verringert. Durch Zusatz derartiger Teilchen wird daher die Maßhaltigkeit von Gussteilen aus dem Kompositwerkstoff verbessert.

Teilchengröße und die Teilchengrößenverteilung der amorphen SiO₂-Teilchen werden anhand des sogenannten D₅₀-Wertes und des D₅₀-Wertes einer Teilchengrößen-Verteilungskurve (kumulatives Volumen der SiO₂-Teilchen in Abhängigkeit von der Teilchengröße) charakterisiert. Der D₉₀-Wert kennzeichnet eine Teilchengröße, die von 90% des kumulativen Volumens der SiO₂-Teilchen nicht erreicht wird, und der D₅₀-Wert repräsentiert eine entsprechende mittlere Teilchengröße. Die Teilchengrößenverteilung wird durch Streulicht- und Laserbeugungsspektroskopie nach ISO 13320 ermittelt.

Die amorphen SiO₂-Teilchen des Grundschlickers haben eine spezifische BET-Oberfläche von mehr als 1 m²/g, wohingegen die BET-Oberfläche der Quarzglaskörnung bei weniger als 1 m²/g liegt. Die SiO₂-Körnung und die Quarzglaskörnung stammen aus dem gleichen Rohstoff oder aus unterschiedlichen Rohstoffen. Der Rohstoff oder die Rohstoffe sind amorph und synthetischen oder natürlichen Ursprungs.

Es hat sich bewährt, wenn durch das Vermahlen SiO₂-Teilchen erzeugt werden, deren Teilchengrößen und Teilchengrößenverteilung durch einen D₅₀-Wert von maximal 9 µm und durch einen D₉₀-Wert von maximal 40 µm gekennzeichnet sind.

Durch diese Maßnahme wird eine hohe Gründichte und einer gute Homogenität und Feinporigkeit der Grünkörpermatrix erreicht, die in Kombination mit der zugesetzten Quarzglaskörnung zu einer geringen Trocken- und Sinterschwindung des Grünkörpers von insgesamt weniger als 4 % und sogar weniger als 2,5 % beiträgt.

Das Homogenisieren des Grundschlickers erfordert eine gewisse Prozessdauer. Als geeignet hat sich ein mindestens 12 Stunden andauerndes Homogenisieren des Grundschlickers erwiesen, vorzugsweise dauert dieser Verfahrensschritt mindestens 24 Stunden an. Im Fall eines gleichzeitigen Homogenisierens und Vermahlens von SiO₂-Körnung sind durch Einsatz optimierter Mahlkörper, beispielsweise aus Al₂O₃, auch kürzere Prozessdauern möglich. Der so erzeugte Grundschlicker ist zwar zum Herstellen von Gussteilen direkt nutzbar, sein Feststoffgehalt wird jedoch vorzugsweise durch Zugabe von Quarzglaskörnung vorher erhöht.

Zu einer geringen Trocken- und Sinterschwindung trägt auch bei, wenn maximal 10 Gew.-% der SiO₂-Teilchen im Grundschlicker eine Teilchengröße von weniger als 1 µm aufweisen.

Bei einer geringen Menge (bis zu einem Anteil von ca. 10 Gew.-%; bezogen auf die Gesamtmasse der SiO₂-Teilchen) kommt derartig feinteiligen SiO₂-Teilchen eine bindemittelähnliche Wirkung im Grünkörper zu. Sie tragen dann zur Erhöhung von Dichte und mechanischer Festigkeit des Grünkörpers - und damit des daraus hergestellten Kompositwerkstoffs - bei, indem sie beim Sintern die sogenannte Halsbildung fördern und somit als Sinterhilfsmittel wirken und die Sintertemperatur verringern. Bei Mengen von mehr als 10 Gew.-% kommt es aufgrund eines erhöhten Flüssigkeitsbedarfs zu stärkerer Schwindung. Gehalte der genannten feinteiligen SiO₂-Teilchen von mehr als 10 Gew.-% im Grundschlicker sind daher in der Regel zu vermeiden.

In dem Zusammenhang ist zu beachten, dass besonders feinteilige SiO₂-Teilchen mit Teilchengrößen im Nanometerbereich, wie sie beispielsweise in kolloidalen SiO₂-Suspensionen vorliegen, zwar zu einer höheren Grundfestigkeit des Grünkörpers, aber auch zu einer größeren Schwindung führt. Daher weisen vorteilhaft maximal 5 Gew.-% der SiO₂-Teilchen im Grundschlicker, vorzugsweise maximal 1 Gew.-% der SiO₂-Teilchen (bezogen auf die Gesamtmasse der SiO₂-Teilchen) im Grundschlicker, eine Teilchengröße von weniger als 100 nm auf.

Der Zusatz an derartig feinteiligen SiO₂-Teilchen wird erfindungsgemäß auf maximal 5 Gew.-% (bezogen auf die Masse des Grundschlickers), noch besser auf maximal 1 Gew.-% begrenzt. Zu Gunsten einer geringeren Gesamtschwindung wird eine geringere Grünkörper-Festigkeit in Kauf genommen. Infolgedessen ist ein wie oben erläuterter Trocknungsprozess bei vergleichsweise niedrigen Trocknungstemperaturen erforderlich, um ein rissfreies Trocknen des Blaukörpers zu erreichen.

Vorzugsweise wird ein Grundschlicker mit einem Feststoffgehalt zwischen 75 Gew.-% und 82 Gew.-% erzeugt.

Bei einem Feststoffgehalt von weniger als 75 Gew.-% neigt der Grundschlicker zu einer Sedimentation und es wird eine zu geringe Grünkörperdichte und Homogenität erreicht. Die Gesamtschwindung (Trocken und Sinterschwindung) des daraus hergestellten Kompositwerkstoffs ist dann zu hoch, um rissfreie Quarzglasbauteile herstellen zu können. Bei einem Feststoffgehalt oberhalb der genannten Obergrenze besteht die Gefahr, dass der Schlicker durch Verklumpen der SiO₂-Masse seine Gießfähigkeit verliert.

In einer ersten bevorzugten Verfahrensvariante wird dem Grundschlicker grobkörnige Quarzglaskörnung beigefügt, bei der die Quarzglaskörnung eine mittlere Korngröße (D₅₀-Wert) im Bereich zwischen 200 µm und 1000 µm, bevorzugt im Bereich zwischen 50 µm und 500 µm, und besonders bevorzugt im Bereich zwischen 90 µm und 200 µm aufweist.

In einer zweiten gleichermaßen bevorzugten Verfahrensvariante wird dem Grundschlicker feinkörnige Quarzglaskörnung beigefügt, bei der die Quarzglaskörnung eine mittlere Korngröße (D₅₀-Wert) im Bereich zwischen 10 µm und 90 µm, bevorzugt im Bereich zwischen 15 µm und 60 µm aufweist.

In jedem dieser bevorzugten Verfahrensvarianten bewirkt die Quarzglaskörnung - wie bereits erläutert - eine geringere Schwindung beim Trocknen und Sintern des Grünkörpers, so dass durch den Zusatz dieser Teilchen die Formstabilität und Maßhaltigkeit eines aus dem Kompositwerkstoff hergestellten Quarzglasbauteils verbessert wird. Eine Gesamtschwindung von weniger als 4 %, sogar weniger als 2,5 % ist erreichbar. Die Quarzglaskörnung dient im wesentlichen als Füllstoff, kann jedoch zur Einstellung physikalischer oder chemischer Eigenschaften des Kompositwerkstoffs gezielt ausgewählt werden. Mit abnehmender Größe der Quarzglaskörnung nehmen die beschriebenen Wirkungen ab, wohingegen beim Einsatz grober Quarzglaskörnung mit Korngrößen oberhalb von 1000 µm ein Kompositwerkstoff mit inhomogener Struktur und vergleichsweise geringer Festigkeit erhalten wird.

Außerdem wird durch den Zusatz der Quarzglaskörnung zum Grundschlicker eine bimodale Verteilung der SiO₂-Partikel im Grünkörper erzielt, die zu einer höheren Dichte beiträgt, wobei sich im Hinblick hierauf sowohl eine gröbere Quarzglaskörnung, deren mittlere Korngröße (D₅₀-Wert) besonders bevorzugt im Bereich zwischen 90 µm und 200 µm liegt, als auch eine feinere Quarzglaskörnung besonders bewährt haben. Die feinere Quarzglaskörnung wird bevorzugt in Form einer sphärischen Körnung eingesetzt.

Zu einem hohen Feststoffgehalt des Kompositschlickers trägt auch ein Absenken des pH-Wertes des Grundschlickers bei. Bereits das Vermahlen der SiO₂-Körnung führt infolge der sich beim Mahlen vergrößernden spezifischen Oberfläche der SiO₂-Körnung zu einer höheren Löslichkeit von SiO₂ in der Flüssigkeit und damit zu einer Absenkung des pH-Werts des Grundschlickers.

Zusätzlich kann der pH-Wert durch Zugabe ansäuernder Komponenten, wie beispielsweise durch Zusatz nanoskaliger Kieselsäureteilchen oder eines diese enthaltenen Sols, abgesenkt werden, um die Löslichkeit von SiO₂ zu erhöhen. Bei einer bevorzugten Verfahrensweise wird der pH-Wert des Grundschlickers durch Zusatz einer Säure eingestellt.

Im Hinblick auf eine möglichst geringe Gesamtschwindung des Kompositwerkstoffs bei gleichzeitig hoher Dichte und Festigkeit hat es sich als günstig erwiesen, wenn der Anteil des Feststoffes aus dem Grundschlicker an der Gesamtmasse des Feststoffes im Kompositschlicker zwischen 30 Gew.-% und 60 Gew.-% liegt.

Bei einem Massenanteil des Grundschlickers von weniger als 30 Gew.-% wird eine reduzierte Vernetzung und eine geringe Grundfestigkeit des Grünkörpers erzielt, während sich bei einem Massenanteil des Grundschlickers von mehr als 60 Gew.-% ein Kompositwerkstoff mit erhöhter Schwindung und reduzierter Maßhaltigkeit ergibt.

In der Regel ist die Dichte des Kompositwerkstoffs um so größer und die Gesamtschwindung um so geringer, je höher die Dichte des Kompositschlickers eingestellt wird. Vorzugsweise weist der Kompositschlicker eine Dichte von mindestens 1,95 g/cm³ auf.

Die folgenden Ausführungen beziehen sich auf alle oben genannten, geeigneten Werkstoffe.

Es hat sich als besonders günstig erwiesen, den Grünkörper oder das Gussteil einer Heißbehandlung in einer Stickstoff oder eine Stickstoffverbindung enthaltenden Atmosphäre zu unterziehen.

Dadurch wird eine mit Stickstoff angereicherte Oberflächenschicht erzeugt, die eine Diffusionssperre für die Diffusion von Gasen, insbesondere von Sauerstoff bildet. Beim Einsatz des Gussteils in Kontakt mit einer Schmelze, wie zum Beispiel Silizium, verringert die Diffusionssperrschicht den Transport von Sauerstoff aus dem Gussteil in die Schmelze. Zur Herstellung der Diffusionssperrschicht wird entweder der Grünkörper in einer Stickstoff oder eine Stickstoffverbindung enthaltenden Atmosphäre gesintert, oder das bereits thermisch vorverdichtete Gussteil wird in einer derartigen Atmosphäre erhitzt. Im Fall von Quarzglas (Werkstoff) liegt die bevorzugte Behandlungstemperatur im Bereich zwischen 1100 °C und 1450 °C. Im Fall eines Grünkörpers aus metallischem Silizium wird dieser infolge der Heißbehandlung in einer Stickstoff oder eine Stickstoffverbindung enthaltenden Atmosphäre vollständig oder zumindest zum größten Teil in Siliziumnitrid überführt. Da Siliziumnitrid von Siliziumschmelzen nicht benetzt wird, kann auf diese Weise ein mehrfach einsetzbarer "Mehrwegtiegel" zum Schmelzen von Solarsiliziumblöcken erzeugt werden.

Es hat sich als günstig erwiesen, wenn die Heißbehandlung eine Behandlung in einem stickstoffhaltigen Plasma umfasst.

Durch die plasmaunterstützte Nitridierung wird eine rasche Stickstoffanreicherung auch tieferer Schichten erreicht.

Bevorzugt wird eine Form eingesetzt, bei der ein Hohlraum von einer zylinderförmigen Innenwandung begrenzt ist.

Bei der üblichen Gipsformtechnik weisen die Formen zur Erleichterung des Entnahme des Blaukörpers häufig leicht konische Innenwandungen auf. Diese Maßnahme ist beim erfindungsgemäßen Verfahren nicht erforderlich, so dass die Herstellung exakt zylinderförmiger Gussteile erleichtert wird. Dies ist vorallem dann von Vorteil, wenn das Gussteil selbst als Gießform (Tiegel) zur Herstellung zylinderförmiger Gusskörper eingesetzt wird, da in dem Fall eine Nachbearbeitung der Gusskörper-Wandungen zur Erzeugung der Zylindergeometrie nicht erforderlich ist. Insbesondere vereinfacht das erfindungsgemäße Verfahren die Herstellung rechteckiger Gussteile, indem eine Form eingesetzt wird, deren Innenwandung einen rechteckigen Hohlraum umschließt.

Insbesondere für die Herstellung von tiegelförmigen Gussteilen hat es sich als besonders günstig erwiesen, in den Hohlraum der Form ein Gießkern einzusetzen, der von dem Kompositschlicker vollständig übergossen wird.

Bei vollständig undurchlässiger Formwandung erfolgt kein "Nachsacken" des Kompositschlickers, so dass eine glatte Gießoberfläche erhalten wird. Diese glatte Gießoberfläche, die keiner Nachbearbeitung bedarf, bildet den Boden (Außenseite) des tiegelförmigen Gussteils.

Hinsichtlich des Gussteils aus einem keramischen oder einem glasigen Kompositwerkstoff wird die oben angegebene Aufgabe ausgehend von dem eingangs genannten Werkstoff erfindungsgemäß dadurch gelöst, dass die Wandung eine homogene Poren- und Dichteverteilung aufweist, derart, dass die lokale Dichte über die gesamte Wandung, in Richtung senkrecht zu der Gießachse gesehen, um maximal 5 % von der mittleren Dichte des Kompositwerkstoffs abweicht.

Das erfindungsgemäße Gussteil zeichnet sich durch eine homogene Poren- und Dichteverteilung aus. Es weist somit keine Gießseele auf, wie sie beispielsweise beim Abgießen von Schlicker in Formen mit saugenden Wandungen entstehen kann. Das erfindungsgemäße Gussteil zeigt daher eine hohe mechanische Festigkeit. Es ist nach dem erfindungsgemäßen Verfahren herstellbar. Durch rasches Einfrieren eines Kompositschlickers mit hohem Feststoffgehalt in einer Form mit einer für die Flüssigkeit des Kompositschlickers nicht durchlässigen Wandung wird die Ausbildung von Dichtegradienten senkrecht zu der Gießachse weitgehend vermieden.

Das erfindungsgemäße Gussteil besteht aus einem Kompositwerkstoff, welcher eine homogene Matrix aus dem Werkstoff umfasst, in der gröbere Körner des Werkstoffes eingebettet sind. Bei dem Werkstoff handelt es sich um Quarzglas, Siliziumnitrid, Siliziumcarbid, Zirkonsilikat, Silizium, oder um ein Gemisch dieser Substanzen.

Zur Messung der Dichte werden würfelförmige Proben mit einer Kantenlänge von 1 cm aus der Wandung des Gussteils entnommen und durch Röntgenverfahren vermessen. Die Gießachse kennzeichnet die Orientierung des Gussteils bei seiner Herstellung kennzeichnet und

Im Fall von Quarzglas zeichnet sich der Kompositwerkstoff durch eine Dichte von mindestens 1,80 g/cm³ aus.

Vorzugsweise ist das erfindungsgemäße Gussteil als Kerngussteil mit rechteckigem Querschnitt und zylinderförmiger Innenwandung ausgebildet.

Die zylinderförmige Innenwandung ist für einen Einsatz des Gussteils als Gießform (Kokille zum Schmelzen von Solarsilizium) zur Herstellung zylinderförmiger Gusskörper besonders geeignet, da eine Nachbearbeitung der Gusskörper-Wandungen zur Erzeugung der Zylindergeometrie nicht erforderlich ist.

Es wird eine Ausführungsform des erfindungsgemäßen Gussteils bevorzugt, das eine mit Stickstoff dotierte Oberflächenschicht aufweist.

Kokillen zum Schmelzen von Solarsilizium sind in der Regel mit einer S₁₃N₄-Trennschicht versehen. Demgegenüber zeichnet sich das Gussteil gemäß der Erfindung durch eine integrale Oberflächenschicht aus, in welcher der Werkstoff mit Stickstoff dotiert ist. Die mit Stickstoff angereicherte Oberflächenschicht wirkt als Diffusionssperre für die Diffusion von Gasen, insbesondere von Sauerstoff. Der Stickstoffgehalt der Oberflächenschicht liegt hierzu bei mindestens 1 Gew.-%, vorzugsweise bei mindestens 0,5 Gew.-%.

Das erfindungsgemäße Gussteil wird vorzugsweise durch das erfindungsgemäße Verfahren erhalten. Insoweit wird auf die obigen Erläuterungen Bezug genommen.

Nachfolgend wird die Erfindung anhand von Ausführungsbeispielen und einer Zeichnung näher erläutert.

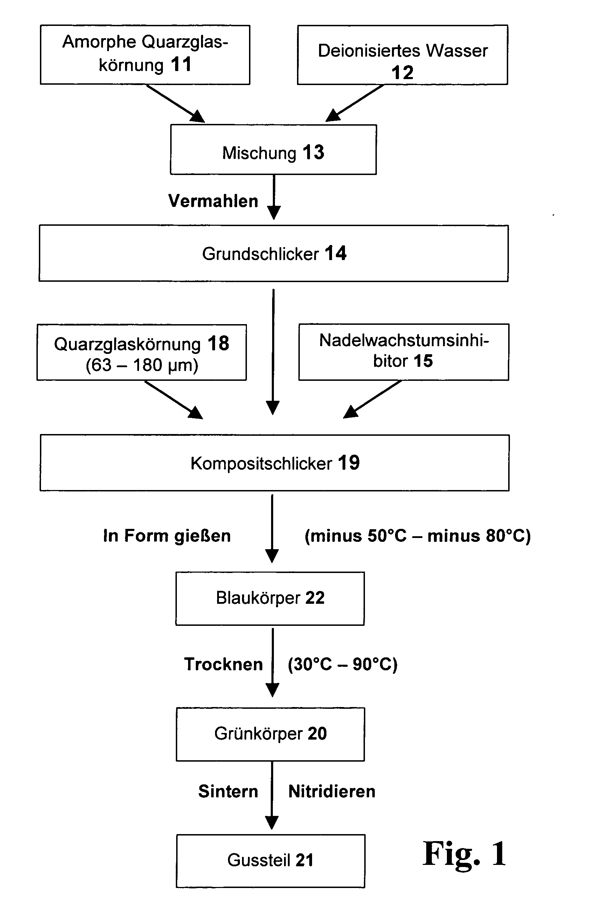

- **Figur 1**: ein Fließdiagramm zur Erläuterung einer Verfahrensweise zur Herstellung des Kompositwerkstoffs anhand des erfindungsgemäßen Verfahrens.

### Beispiel 1

Es wird zunächst ein homogener Grundschlicker 14 hergestellt. Für einen Ansatz von 10 kg Grundschlicker (SiO₂-Wasser-Suspension) werden in einer mit Al₂O₃ ausgekleideten Trommelmühle mit ca. 20 Liter Volumeninhalt, 8,2 kg einer amorphen Quarzglaskörnung 11 aus natürlichem Rohstoff mit Korngrößen im Bereich zwischen 250 µm und 650 µm mit 1,8 kg deionisiertem Wasser 12 mit einer Leitfähigkeit von weniger als 3 µS vermischt.

Diese Mischung 13 wird mittels Mahlkugeln aus Al₂O₃ (Gewicht: 2,3 kg und 4,5 kg) auf einem Rollenbock bei 23 U/min während einer Dauer von 3 Tagen soweit vermahlen, dass sich ein homogener Grundschlicker 14 mit einem Feststoffgehalt von 82 % und einer Viskosität von 140 mPas bildet. Im Verlauf des Vermahlens kommt es infolge des in Lösung gehenden SiO₂ zu einer Absenkung des pH-Werts auf etwa 5.

Die nach dem Vermahlen der Quarzglaskörnung 11 erhaltenen SiO₂-Teilchen im Grundschlicker 14 zeigen eine Teilchengrößenverteilung, die durch einen D₅₀-Wert von etwa 5 µm und durch einen D₉₀-Wert von etwa 23 µm gekennzeichnet ist.

Aus dem so erhaltenen homogenen Grundschlicker 14 wird ein Kompositschlicker 19 erzeugt, indem eine amorphe SiO₂-Körnung mit einer Korngröße zwischen 63 µm und 180 µm zugemischt wird, bis ein Feststoffgehalt von 90 Gew.-% erreicht ist. Dieser Mischung werden außerdem 16 Gew.-% Glycerin (bezogen auf die verbleibende Flüssigphase), das als Nadelwachstumsinhibitor 15 wirkt, zugeführt und die Mischung 12 Stunden lang homogenisiert. Das Homogenisieren erfolgt in der Trommelmühle bei einer Drehzahl von 25 U/min, wobei aber nur 1/10 der Mahlkugeln eingesetzt werden, wie sie beim Vermahlen verwendet werden.

Der so erzeugte Kompositschlicker 19 hat einen Feststoffgehalt von 90%, eine Viskosität von 1531 mPas und eine Dichte von 2,0 g/cm³.

Anschließend wird aus dem homogenen Kompositschlicker 19 ein Grünkörper 20 erzeugt. Hierzu wird der Kompositschlicker 19 in eine Membranform aus vakuumgeformten Silikon gegossen, die in Kohlendioxidschnee (Trockeneis) eingebettet ist. Dadurch wird ein rasches Einfrieren des Kompositschlickers zu einem Blaukörper 22 bewirkt.

Die Zugabe von Glycerin zu dem Kompositschlicker 19 trägt zu einem homogenen Gefüge bei, das frei von Eisnadelstrukturen ist. Da die Wandungen der Membranform für Wasser undurchlässig sind, wird die Ausbildung einer Gießseele vermieden und es erfolgt kein "Nachsacken" des Kompositschlickers 19, so dass ein Blaukörper 22 mit glatter Gießoberfläche erhalten wird.

Der schockgefrorene Blaukörper 22 wird der Membranform entnommen und unmittelbar - in gefrorenem Zustand - in einen auf 80 °C vorgewärmten Umlufttrockenschrank eingebracht und darin mehrere Stunden lang bei dieser Temperatur getrocknet. Durch das stetige Abdampfen und Abführen der Feuchtigkeit von der Oberfläche wird Rekondensation von Feuchtigkeit und ein nochmaliges oberflächliches Einfrieren, das mit Nadelkristallbildung und einer Störung des Grünkörpergefüges verbunden wäre, verhindert.

Besonders wichtig ist, dass es beim Trocknen zu einer Verfestigung des Blaukörpers 22 zu einem selbsttragenden Grünkörper 20 kommt. Das Auftreten einer flüssigen Phase wird vermieden, indem das Eis sublimiert und gerade aufgetaute Feuchtigkeit sofort verdampft wird. Neben der niedrigen Trocknungstemperatur trägt der geringe Feuchtigkeitsgehalt des Blaukörpers 22 zum Gelingen bei. Gleichzeitig mit der Wasserverdampfung wird auch der größte Teil des zugesetzten Glycerins in die Gasphase überführt. Mangels des Zusatzes nanoskaliger SiO₂-Teilchen zu dem Kompositschlicker 19, zeigt der Grünkörper 20 eine verhältnismäßig geringe Festigkeit, wenn er nicht, wie oben beschrieben getrocknet wird.

Der getrocknete Grünkörper 20 wird 2 Stunden lang bei eine Temperatur von 1250 °C zu einem Gussteil 21 aus opakem Quarzglas gesintert.

Der Kompositwerkstoff des Gussteils 21 weist eine Dichte von 1,95 g/cm³ auf. Er besteht aus einer Matrix mit homogenem Gefüge mit gleichmäßiger Feinporigkeit und homogener Dichteverteilung, in das die Quarzglaskörnung eingebettet ist. Er zeichnet sich durch hohe Temperaturwechselbeständigkeit sowie durch ausgezeichnete chemische Beständigkeit, insbesondere gegenüber einer Siliziumschmelze, aus. Seine Gesamtschwindung (Trocken- und Sinterschwindung) gegenüber den Maßen der Gießform beträgt 1,5 %.

### Beispiel 2

Nachfolgend wird ein weiteres Ausführungsbeispiel des erfindungsgemäßen Verfahrens für die Herstellung einer Kokille aus opakem Quarzglas zur Aufnahme einer Schmelze aus Solarsiliziums mittels eines Kerngussverfahrens näher beschrieben.

Es wird der Kompositschlicker gemäß Beispiel 1 hergestellt, wobei 50% das dort zugesetzten Glycerins durch TEOS ersetzt werden. TEOS bewirkt neben der Kornfeinung des Eises eine Erhöhung des Feststoffgehaltes mittels Sol-Gel-Reaktion und eine Erhöhung der Grün- und Sinterfestigkeit des Grünkörpers.

In eine quadratische, mehrteilige Aluminiumform mit teflonbeschichteten Innenwandungen mit den Innenmaßen 850 mm x 850 mm wird mittig ein quadratischer Gießkern mit den seitlich Abmessungen 830 mm x 830 mm und einer Höhe von 450 mm eingesetzt. Die Aluminiumform wird auf eine Temperatur von minus 20 °C gekühlt und mit dem Kompositschlicker 19 so hoch aufgefüllt, dass dieser den Gießkern überdeckt.

Das Schockgefrieren verhindert eine Sedimentation und ein Entmischen des Kompositschlickers 19 und bewirkt ein schnelles Koagulieren. Da die Wandungen der Metallform für Wasser undurchlässig sind, findet keine Ausbildung einer Gießseele statt. Es erfolgt auch kein "Setzen" des Kompositschlickers 19, so dass eine glatte Gießoberfläche erhalten wird, die nach der Trocknung und Verfestigung keiner Nachbearbeitung bedarf und die bei der fertigen Kokille 21 den Boden (Außenwandung) bildet.

Der schockgefrorene Blaukörper 22 wird der Metallform entnommen und unmittelbar - in gefrorenem Zustand - in einen Mikrowellentrocknungsofen mit Umluft eingebracht und darin bei einer Temperatur von etwa 80 °C mehrere Stunden lang im Pulsbetrieb getrocknet. Dabei dampft die auftauende Flüssigkeit kontinuierlich von der Oberfläche ab, bis das Wasser und de größte Teil des Glycerins verdampft sind. Außerdem wird eine Rekondensation von Feuchtigkeit und ein nochmaliges oberflächliches Einfrieren, das mit Nadelkristallbildung und einer Störung des Grünkörpergefüges verbunden wäre, verhindert.

Nach dem Trocknen wird der so erhaltene Grünkörper 20 in einen Sinterofen eingebracht und bei einer Temperatur von ca. 1200 °C 3 Stunden lang in einer Atmosphäre aus einem Gemisch von Ammoniak und Stickstoff behandelt und dabei zu einer Kokille 21 aus stickstoffhaltigem, opakem Quarzglas gemäß der Erfindung gesintert.

Die Kokille 21 hat einen rechteckigem Querschnitt mit Abmessungen von 850 mm x 850 mm x 500 mm und senkrechte Wände. Der Stickstoffgehalt im Bereich der Oberfläche liegt bei ca. 2 Gew.-% Beim Einsatz der Kokille 21 zum Schmelzen von Silizium wirkt die stickstoffhaltige Oberflächenschicht der Diffusion von Sauerstoff in die Schmelze entgegen, so dass ein Siliziumblock mit geringem Sauerstoffgehalt erhalten wird, was sich auf den Wirkungsgrad der daraus gefertigten Solarzellen günstig auswirkt. Im Vergleich zu den üblichen Kokillen mit konischen Wandungen, vermindern die senkrechten Wandungen der erfindungsgemäßen Kokille 21 Verschnitt bei dem darin erschmolzenen Siliziumblock.

### Beispiel 3

Es wird ein "Mikro-Kompositschlicker" hergestellt. Hierzu werden 7900 g eines synthetischen amorphen Quarzglases hoher Reinheit mit 2100 g deionisiertem Wasser in einer mit Polyurtethan ausgekleideten Kugelmühle mit Al₂O₃-Mahlkugeln zu einem feinteiligen Grundschlicker mit einem D₅₀-Wert von 5,5 µm und einem D₉₀-Wert von 24 µm und einem Feststoffgehalt von 79 Gew.-% aufgemahlen. 2000 g dieses Grundschlickers werden mit 1250 g einer weitgehend sphärischen amorphen Quarzglaskörnung mit einem D₅₀-Wert von 16 µm homogenisiert. Die Schlickerdichte beträgt 1,92 g/cm³.

Dem Mikro-Kompositschlicker werden 14 Gew.-% Glycerin zugefügt. Nach 12-stündiger Homogenisierungsdauer wird der Mikro-Kompositschlicker in eine als Rohr ausgebildete und vorab bei einer Temperatur von 90 °C ausgeheizte Silikon-Membranform mit vertikal orientierter Rohr-Längsachse gegossen und bei -50°C in der Form eingefroren. Nach 3 Stunden wird der gefrostete Blaukörper dem Gefriergerät entnommen und die Stützform sowie die Silikon-Membran entfernt.

Der Blaukörper wird unmittelbar in einen auf 80 °C vorgeheizten Umluftofen transportiert und unter kontinuierlichen Verdampfung und Abführung der Feuchtigkeit von der Oberfläche getrocknet. Schließlich wird der trockene Grünkörper bei einer Temperatur von 1440°C während 2h zu einem Quarzglasrohr gesintert, das eine Dichte von 2,15 g/cm³ aufweist, das opak ist, und das sich durch ein gleichmäßiges homogenes Gefüge mit homogener Dichte- und Porenverteilung auszeichnet.. Eine Gießseele ist nicht erkennbar. Innen, außen und in der Mitte der Rohrwandung (im Bereich der halben Rohrlänge) entnommene würfelförmige 1cm³-Messproben sind keine Dichteunterschiede messbar.

### Beispiel 4

Es wird ein Grundschlicker gemäß Beispiel 3 hergestellt, und diesem werden 2000 g amorphe synthetische, flammverglaste SiO₂-Körnung einer Korngröße von 60 µm -125 µm mit einem D₅₀-Wert von 80 µm zugemischt bis ein Feststoffgehalt von 90,4 Gew.-% erreicht ist. Nach Zugabe von 15 Gew.-% TEOS (bezogen auf das Gewicht der Flüssigkeit) ist der Schlicker gut gießfähig. Er wird in eine als Flansch ausgebildete Form aus teflonbeschichtetem Blech gegossen, darin gefroren und anschließend gesintert, wie anhand Beispiel 1 beschrieben.

Das fertige Flanschteil besteht aus opakem Quarzglas und es weist eine homogene Poren- und Dichteverteilung auf. Die Gesamtschwindung liegt bei ca. 2,5 %. Es ist frei von Kalzium-Kontaminationen, wie sie bei der herkömmlichen Gipsformtechnik auftreten.

## Patentansprüche

1. Verfahren für die Herstellung eines Gussteils aus einem Kompositwerkstoff durch Bereitstellen eines Kompositschlickers, der Werkstoffteilchen im Größenbereich unterhalb von 10 µm sowie Werkstoffkörnung im Größenbereich oberhalb von 10 µm enthält, Homogenisieren des Kompositschlickers, Gießen des Kompositschlickers in eine Form unter Bildung eines Blaukörpers, Trocknen des Blaukörpers unter Bildung eines porösen Grünkörpers, und thermische Verfestigung des Grünkörpers, **dadurch gekennzeichnet, dass** der Kompositschlicker mit einem Feststoffgehalt von mindestens 80 Gew.-% in eine Form gegossen wird, welche eine für die Flüssigkeit undurchlässige Formwandung aufweist, wobei der Kompositschlicker nach dem Gießen unter Bildung eines gefrorenen Blaukörpers auf eine Kühltemperatur unterhalb des Gefrierpunktes der Flüssigkeit abgekühlt wird, und wobei das Trocknen ein Erwärmen des gefrorenen Blaukörpers auf eine Heiztemperatur unterhalb der Siedetemperatur der Flüssigkeit umfasst.

2. Verfahren nach Anspruch 1, **dadurch gekennzeichnet, dass** die Kühltemperatur zwischen minus 20°C und minus 80 °C, vorzugsweise zwischen minus 30 °C und minus 60°C, liegt.

3. Verfahren nach Anspruch 1, **dadurch gekennzeichnet, dass** die Heiztemperatur im Bereich zwischen 40°C und 90°C, vorzugsweise im Bereich zwischen 50°C und 80°C liegt.

4. Verfahren nach einem der vorhergehenden Ansprüche, **dadurch gekennzeichnet, dass** der gefrorene Blaukörper in einer Trockenkammer, aus der Feuchtigkeit abgezogen wird, getrocknet wird.

5. Verfahren nach einem der vorhergehenden Ansprüche, **dadurch gekennzeichnet, dass** der Kompositschlicker in eine Form gegossen wird, die auf eine Temperatur unterhalb des Gefrierpunktes der Flüssigkeit gekühlt ist.

6. Verfahren nach einem der Anspruch 1 bis 4, **dadurch gekennzeichnet, dass** der Kompositschlicker in eine Form gegossen, die auf eine Temperatur oberhalb der Umgebungstemperatur erwärmt ist.

7. Verfahren nach einem der vorhergehenden Ansprüche, **dadurch gekennzeichnet, dass** dem Kompositschlicker eine die Bildung von Eiskristallen inhibierende Substanz beigefügt wird.

8. Verfahren nach einem der vorhergehenden Ansprüche, **dadurch gekennzeichnet, dass** zur Herstellung eines Gussteils aus Quarzglas der Kompositschlicker amorphe SiO₂-Teilchen im Größenbereich unterhalb von 10 µm sowie Quarzglaskörnung im Größenbereich oberhalb von 10 µm, vorzugsweise oberhalb von 100 µm, enthält, und mit einer Dichte von mindestens 1,75 g/cm³ in die Form gegossen wird.

9. Verfahren nach Anspruch 8, **dadurch gekennzeichnet, dass** der Kompositschlicker erhalten wird, indem SiO₂-Teilchen, deren Teilchengrößen und Teilchengrößenverteilung durch einen D₅₀-Wert von maximal 15 µm und durch einen D₉₀-Wert von maximal 50 µm **gekennzeichnet** sind, mit Flüssigkeit vermischt werden, wobei ein homogener Grundschlicker mit einem Feststoffgehalt von mindestens 75 Gew.-% erzeugt wird, und wobei in den homogenen Grundschlicker die Quarzglaskörnung unter Bildung des Kompositschlickers eingemischt wird.

10. Verfahren nach Anspruch 9, **dadurch gekennzeichnet, dass** die SiO₂-Teilchen erzeugt werden, indem amorphe SiO₂-Körnung in der Flüssigkeit zu den SiO₂-Teilchen vermahlen wird.

11. Verfahren nach Anspruch 10, **dadurch gekennzeichnet, dass** durch das Vermahlen SiO₂-Teilchen erzeugt werden, deren Teilchengrößen und Teilchengrößenverteilung durch einen D₅₀-Wert von maximal 9 µm und durch einen D₉₀-Wert von maximal 40 µm **gekennzeichnet** sind.

12. Verfahren nach Anspruch 10 oder 11, **dadurch gekennzeichnet, dass** das Vermahlen und Homogenisieren des Grundschlickers mindestens 12 Stunden, vorzugsweise mindestens 24 Stunden andauert.

13. Verfahren nach einem der vorhergehenden Ansprüche 9 bis 12, **dadurch gekennzeichnet, dass** maximal 10 Gew.-% der SiO₂-Teilchen im Grundschlicker eine Teilchengröße von weniger als 1 µm aufweisen

14. Verfahren nach einem der Ansprüche 9 bis 13, **dadurch gekennzeichnet, dass** maximal 5 Gew.-% der SiO₂-Teilchen im Grundschlicker, vorzugsweise maximal 1 Gew.-% der SiO₂-Teilchen im Grundschlicker, eine Teilchengröße von weniger als 100 nm aufweisen..

15. Verfahren nach einem der vorhergehenden Ansprüche 9 bis 14, **dadurch gekennzeichnet, dass** ein Grundschlicker mit einem Feststoffgehalt zwischen 75 Gew.-% und 82 Gew.-% erzeugt wird.

16. Verfahren nach einem der vorhergehenden Ansprüche 9 bis 15, **dadurch gekennzeichnet, dass** dem Grundschlicker eine grobkörnige Quarzglaskörnung beigefügt wird, die eine mittlere Korngröße (D₅₀-Wert) im Bereich zwischen 200 µm und 1000 µm, bevorzugt im Bereich zwischen 50 µm und 500 µm, und besonders bevorzugt im Bereich zwischen 90 µm und 200 µm aufweist.

17. Verfahren nach einem der vorhergehenden Ansprüche 9 bis 15, **dadurch gekennzeichnet, dass** dem Grundschlicker eine feinkörnige Quarzglaskörnung beigefügt wird, die eine mittlere Korngröße (D₅₀-Wert) im Bereich zwischen 10 µm und 90 µm, bevorzugt im Bereich zwischen 15 µm und 60 µm aufweist.

18. Verfahren nach einem der vorhergehenden Ansprüche 9 bis 17, **dadurch gekennzeichnet, dass** dem Grundschlicker eine Säure zur Senkung des pH-Wertes beigemischt wird.

19. Verfahren nach einem der vorhergehenden Ansprüche 9 bis 18, **dadurch gekennzeichnet, dass** der Anteil des Feststoffes aus dem Grundschlicker an der Gesamtmasse des Feststoffes im Kompositschlicker zwischen 30 Gew.-% und 60 Gew.-% liegt

20. Verfahren nach einem der vorhergehenden Ansprüche, **dadurch gekennzeichnet, dass** der Kompositschlicker eine Dichte von mindestens 1,95 g/cm³ aufweist.

21. Verfahren nach einem der vorhergehenden Ansprüche, **dadurch gekennzeichnet, dass** der Grünkörper oder das Gussteil einer Heißbehandlung in einer Stickstoff oder eine Stickstoffverbindung enthaltenden Atmosphäre unterzogen wird.

22. Verfahren nach Anspruch 21, **dadurch gekennzeichnet, dass** die Heißbehandlung eine Behandlung in einem stickstoffhaltigen Plasma umfasst.

23. Verfahren nach einem der vorhergehenden Ansprüche, **dadurch gekennzeichnet, dass** eine Form eingesetzt wird, bei der ein Hohlraum von einer zylinderförmigen Innenwandung begrenzt ist.

24. Verfahren nach Anspruch 23, **dadurch gekennzeichnet, dass** die Innenwandung einen rechteckigen Hohlraum begrenzt.

25. Verfahren nach Anspruch 23 oder 24, **dadurch gekennzeichnet, dass** in den Hohlraum ein Gießkern eingesetzt ist, der von dem Kompositschlicker vollständig übergossen wird.

26. Gussteil aus einem keramischen oder glasigen Kompositwerkstoff, der eine homogene Matrix aus dem Werkstoff aufweist, in welcher Körner des Werkstoffs mit einer Korngröße von mehr als 10 µm eingebettet sind, und der eine Wandung aufweist, innerhalb der eine Gießachse verläuft, die während des Gießens in der Vertikalen verläuft, **dadurch gekennzeichnet, dass** die Wandung eine homogene Poren- und Dichteverteilung aufweist, derart, dass die lokale Dichte über die gesamte Wandung, in Richtung senkrecht zu der Gießachse gesehen, um maximal 5 % von der mittleren Dichte des Kompositwerkstoffs abweicht.

27. Gussteil nach Anspruch 26, **dadurch gekennzeichnet, dass** es als Kerngussteil mit rechteckigem Querschnitt und zylinderförmiger Innenwandung ausgebildet ist.

28. Gussteil nach Anspruch 26 oder 27, **dadurch gekennzeichnet, dass** es eine mit Stickstoff dotierte Oberflächenschicht aufweist.
